(19) **Europäisches Patentamt / European Patent Office / Office européen des brevets**

(11) **EP 2 356 912 B1**

(12) # EUROPEAN PATENT SPECIFICATION

(45) Date of publication and mention
of the grant of the patent:
**05.04.2017 Bulletin 2017/14**

(51) Int Cl.:
*A23L 33/20* (2016.01)     *A23L 27/30* (2016.01)
*A23L 29/30* (2016.01)

(21) Application number: **11154260.1**

(22) Date of filing: **12.02.2011**

(54) **Natural sweetener composition**

Naturliche Süssstoffzusammensetzung

Composition édulcorante naturelle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2010 IT BO20100075**

(43) Date of publication of application:
**17.08.2011 Bulletin 2011/33**

(73) Proprietor: **Eridania Italia S.p.A.
Bologna (IT)**

(72) Inventor: **Vallini, Veronica
60015, FALCONARA MARITTIMA (IT)**

(74) Representative: **Bergadano, Mirko et al
Studio Torta S.p.A.
Via Viotti, 9
10121 Torino (IT)**

(56) References cited:
**EP-A1- 0 511 761       WO-A1-01/60167
WO-A1-2008/042417     WO-A2-01/40902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a sweetener composition.

In particular, the present invention relates to a solid (i.e. a non-liquid or gaseous) sweetener comprising a mixture of erythritol and a further natural sweetener.

Sugar (sucrose) is the most commonly used food product for sweetening food products and beverages, not only due to its sweetening power, but also for the several functional and rheological properties that characterise it: it affords products structure and thickness in virtue of its ability to crystallise again within the composition containing it; it makes confectionary products crispy and promotes fermentation; it carries aromas and flavours, as, once heated, it undergoes aromatic modifications and transformations; it affords colour as a function of the treatment temperature; it increases the viscosity in an aqueous solution and, through the process of whipping, it increases the volume of compounds. Sugar, on the other hand, provides calories (4 kcal/g) and has a rather high glycaemic index (GI = 65).

Fructose represents one of the main substituents of sugar, suitable in low calorie dietary incomes, as it provides 20% calories less with respect to sugar while having the same sweetening power and has a reduced glycaemic index (GI = 23). Although the metabolism of fructose is independent of insulin, if an amount of 40 g/day is exceeded, it is converted to glucose. It is considered the sweetest natural sugar (sweetening power of about 120-130% with respect to sucrose) but this prerogative decreases as the temperature, acidity and concentration of the food product to which it is added increase.

In recent years the overall consumption of sugar has decreased considerably, especially in industrialised countries as a consequence of the rapid increase of the incidence of degenerative diseases associated to diet and of the increased awareness of consumers, especially as regards weight and obesity. This has led to an increasing request for sugar free, light or diet products and for calorie free table sweeteners.

Although different sweetening formulations have been suggested, none of the currently available sweeteners have proved to be a completely satisfactory substitute for sugar, in terms of organoleptic, dietary and rheological properties associated to a significant reduction of the energy value and of the glycaemic index.

Furthermore, since many studies question the safety of synthetic sweeteners, the request of consumers and food industry for new natural sweeteners is considerably increasing.

Therefore, the need is felt to identify new composition which have at the same time and as much as possible the following features: flavour and technological properties similar to sucrose, reduced energy value and glycaemic impact (to improve the possibility of use in diabetic individuals).

Recently, sweeteners containing erythritol have been suggested. Erythritol is a natural polyol characterised in a clean flavour, a high digestive tolerance, energy value and glycaemic index which are virtually zero and alleged antioxidant properties. Despite these advantageous peculiarities, erythritol has a sweetening power lower than sucrose (60-70%) and a fresh aftertaste, mainly due to the endothermic reaction it induces in solution.

In this regard, it should be noted that normally even aqueous solutions saturated with erythritol have the above mentioned fresh aftertaste.

It is important to stress that, although the sweetening power is subjectively variable, for each known sweetener, the sweetening power (expressed in % with respect to sucrose, considered 100) is well defined and there are well documented values. In the absence of documented values, a test of the sweetening power may be performed by means of the comparison panel tests with sweeteners the sweetening power of which is known (for example sucrose). This is especially recommended in case of multi sweetener systems, containing different sweeteners appropriately selected and dosed (possibly added with fibres and other functional ingredients).

WO0140902 discloses a method for producing a sweetener composition that includes coating particles of fructose with a terpene glycoside, for example stevioside, so as to obtain intermediate particles that are connected to a sugar alcohol, for example erythritol. In this regard, see in particular from page 5, line 26 to page 6, line 2. It should be noted that non-crystalline particles of erythritol are used as the dimensions of the particles of erythritol are smaller than the dimensions of the crystals (see page 5, lines 3 to 10). Erythritol is presumably in an amorphous form in the final composition also because it is mixed wet with the intermediate particles.

It should be noted that (again with reference to the disclosure WO0140902 the intermediate particles are not made of fructose but comprise fructose and a coating of glycoside terpene and that each particle of the final sweetener composition comprises all three above mentioned components. The sum of the weights of fructose and erythritol is therefore relatively low.

It should be noted that the method disclosed in WO0140902 is especially complicated and expensive; furthermore, the sweetener composition contains a relevant amount of glycoside terpene and is not optimal from an organoleptic standpoint.

WO0160167 relates to a humectant (thus not a sweetener composition), comprising erythritol, a humectant (for example glycerol, propylene glycerol, fructose, sucrose, dextrose or other polyols) and water. According to what has been indicated on page 3, lines 17-21, the composition requires the presence of water (also see the first claim and page 5, lines 12-18). It should be noted that, in the presence of water, erythritol and humectants lose their crystalline structure.

Example 3 of WO0160167 discloses a mixture containing erythritol and fructose. In this regard, it is important to point out that this mixture is obtained according to what has been disclosed in Example 1 (page 10, lines 14-15: "[e]ach blend was made in the same manner as in Example 1"), i.e. by dissolving the humectant (in this case fructose) in water and then adding erythritol. In other words, erythritol is introduced in a solution (therefore not containing crystals) of the humectant in water.

It should be noted that the result of the dictates of WO0160167 presumably can be used as a humectant but not as a sweetener.

US2008/213452 discloses two different types of natural sweetener compositions. A first type comprises considerable amounts of calcium, isomaltulose, and complex mixtures of oligofructose, fructose, isolated vegetal proteins and natural flavours as well as erythritol and sucrose. A second type comprises considerable amounts of maltodextrin, and complex mixtures of oligofructose, fructose, isolated vegetal proteins and natural flavours as well as erythritol. In practice, to replace sugar, US2008/213452 provides extremely complex formulations, the flavour of which (and therefore the end result) can be extremely variable depending on the amounts and on the ingredients employed and the preparation of which is expensive and difficult.

It should also be noted that US2008/213452 does not indicate important information that allows to obtain a natural sweetener that can have organoleptic, low-calorie and rheological properties similar to sucrose. US2008/213452 for example does not specify which is the actual composition of the complex mixtures (in other words, it is not at all clear which amounts of components of the mixtures must be used to obtain a sweetener with similar features to sucrose) and how the different ingredients must be combined and/or mixed.

US2009/104326 discloses a sweetener composition of erythritol and a secondary sweetener in a single solid matrix (in other words, the composition disclosed in this document has mixed crystals of erythritol and a secondary sweetener). The single solid matrix (according to US2009/104326 - for example see paragraph [0010]) is indicated as necessary to obtain a favourable flavour profile. The composition comprises at least 50wt% of erythritol. It should also be noted that the method to produce the above mentioned composition is relatively complicated and expensive; in particular, the erythritol and the secondary sweetener must be extruded through respective separate screw feeders and then the extruded products must be processed together in a single screw feeder (see for example figure 1).

On the basis of the above said, it is clear that the sweetener compositions suggested up to now have dietary features (energy value, glycaemic impact, allergenicity, and/or digestive tolerance) which are not completely satisfactory. Furthermore, the known production methods are relatively complex and expensive.

It is an object of the present invention to provide a sweetener composition, which allows to overcome, at least partially, the drawbacks of the state of the art and are, at the same time, easy and cost-effective to implement.

According to the present invention, there are provided a sweetener composition according to the following independent claim and, preferably, according to any of the claims directly or indirectly dependent on the independent claim.

According to a first aspect of the present invention, there is provided a sweetener composition comprising grains (i.e. small particles) of (i.e. consisting of) erythritol crystals and grains of (i.e. consisting of) crystals of another sweetener selected form the group consisting of: fructose, sucrose, glucose and a mixture thereof. In other words, the sweetener composition comprises grains (i.e. particles) exclusively of (crystals of) erythritol and grains (i.e. particles) exclusively (of crystals) of the further sweetener.

The erythritol and further sweetener crystals are separate from each other. More specifically, the grains of erythritol and the grains of the further sweetener crystals are separate from each other. According to some embodiments, the grains have a size (diameter) between 2 millimetres and half a millimetre.

Advantageously, the further sweetener is selected from the group consisting of: fructose, sucrose and a mixture thereof. In particular, the further sweetener is fructose.

The sweetener composition comprises at least 40% in weight, with respect to the overall weight of the sweetener composition, of the further sweetener. According to some of the embodiments, the sweetener composition comprises at least 45 wt% (in particular 50 wt%), with respect to the overall weight of the sweetener composition, of the further sweetener. In particular, the sweetener composition comprises at least 55% in weight, with respect to the overall weight of the sweetener composition, of the further sweetener.

Advantageously, the sweetener composition comprises up to 75 wt%, with respect to the overall weight of the sweetener composition, of the further sweetener. According to some embodiments, the sweetener composition comprises up to 70% in weight, with respect to the overall weight of the composition, of the further sweetener. In particular, the sweetener composition comprises up to 65 wt%, with respect to the overall weight of the sweetener composition, of the further sweetener.

The sweetener composition comprises at least 25 wt% (in particular at least 30 wt%), with respect to the overall weight of the composition, of erythritol. According to some embodiments, the sweetener composition comprises at least 35 wt%, with respect to the overall weight of the composition, of erythritol.

Advantageously, the sweetener composition comprises up to 70 wt% (in particular up to 60 wt%), with respect to the overall weight of the composition, of erythritol. According to some embodiments, the sweetener composition comprises up to 55 wt%, with respect to the overall weight of the composition, of erythritol. In particular, the sweetener composition comprises up to (in particular less than) 50 wt%, with respect to the overall weight of the composition, of erythritol. More in particular, the sweetener composition comprises up to 45 wt%, with respect to the overall weight of the composition, of erythritol.

Advantageously, the sweetener composition comprises a percentage in weight, with respect to the overall weight of the composition, of erythritol lower than the percentage in weight, with respect to the overall weight of the composition, of the further sweetener.

The sum of the weights of erythritol and of the further sweetener constitutes at least 97% of the overall weight of the composition. In particular, the sum of the weights of erythritol and of the further sweetener constitutes at least 99 wt% of the overall weight of the composition. According to specific embodiments the sweetener composition consists of grains of erythritol crystals and of grains of crystals of a further sweetener.

It should be noted that the composition according to the present invention is extremely simple and easy and cost-effective to produce. In this regard, it should be underlined that to produce the above mentioned composition, it is sufficient to mix in dry conditions the grains of the erythritol crystals and the grains of the crystals of the further sweetener.

It should further be noted that, although the crystal structure is not modified, erythritol acts with the further sweetener (in particular fructose) synergically to compensate the limited sweetening power of erythritol and, at the same time, surprisingly, to cover undesired aftertastes.

Unless explicitly indicated otherwise, the content of the references (papers, texts, patent applications, ISO standards etc.) cited in this text is herein integrally incorporated. In particular, the above mentioned references are herein incorporated by reference.

Further features of the present invention will result from the following disclosure of some embodiments given by mere way of non-limitative illustration.

**Example 1**

SWEETENER COMPOSITION
FE70FJ

| Ingredient | wt% |
| --- | --- |
| Erythritol | 30 |
| Fructose | 70 |

The sweetening power of composition FE70FJ has been compared to saccharose through a qualitative-discriminating sensorial analysis study. For this purpose aqueous solutions have been prepared having the same concentration (10% m/v) of the two sweeteners and have then been compared for sweetness intensity.

For each sweetener a 10% (m/v) aqueous solution was prepared by bringing to volume and mixing 100g of product in a 1L metered flask. The solutions were prepared 1 hour before tasting and stored at a room temperature of 20°C.

The discriminating method of the paired comparison test according to ISO 5495:2005 standard was used to assess whether, the concentration being the same, the aqueous solutions containing the two different compounds were perceived to have the same sweetness intensity.

The samples were tested in the ISO/DIS 8589:2006 standard sensory analysis laboratories of the food and microbiology science and technology department of the University of Milan in a single tasting session.

A group of judges formed by 40 individuals (26 women and 14 men) in an age range between 20 and 60 years old, who were selected and trained, took part in the test.

The judges, who were previously informed not to smoke, drink or eat anything in the hour preceding the tasting test, were called in the laboratory between 11.00 and 12.30 am.

Each taster evaluated, in individual rooms and under white light, two small glasses coded by three figure numbers containing the sweetened solutions. Each judge was instructed as follows for the tasting test: to rinse his/her mouth with natural mineral water (having a low dry residue) before the test, to taste the solutions in the given order, from left to right and to indicate which was perceived as sweeter. In case no difference in the sweetness intensity was perceived between the two samples, the judges were instructed to answer in any case even if their selection was based on an assumption (forced selection method).

As the solutions had a rather high concentration and therefore, were potentially saturated, the judges were instructed to also rinse their mouths between the tasting of one sample and another.

To reduce psychological and physiological mistakes by the judges during testing and due to the order in which the samples were presented, the tasting sequence was randomised and balanced judge by judge, i.e. each judge tasted the samples in a different order.

The results were acquired by the computer system Fizz v2.31g (Biosystemes, Couternon, France).

As stated in the ISO 5495:2005 standard, the results were processed by applying the two-sided statistical test on the basis of the binomial distribution (p=1/2). The number of times the solution sweetened with sucrose was perceived as sweeter and the number of times the solution sweetened with the sweetener mixture FE70FJ was perceived as sweeter were computed. The highest of the two numbers was subsequently compared with the value in the table with the selected significance level (p<0.05). This statistical procedure provides that if the experimental value is higher or identical to that in the table it can be concluded that there is a difference between the two samples in the sweetness intensity, while if the experimental value is lower than that in the table it can be concluded that there is no significant difference between the samples.

The results have shown that, of the 40 judges who took part in the test, 21 identified the sucrose containing solution as the sweetest, while 19 identified the solution containing the sweetened mixture FE70FJ as sweetest.

By looking at the statistical tables for the two-sided test, it can be deduced that the minimum number of answers to conclude that there is a significant difference between the sample as far as sweet taste intensity is concerned corresponds to 27, 29 and 31 for a level of significance equal to 95%, 99% and 99.9% respectively.

Therefore, as the experimental value (21) is lower than that in the table (27), it can be concluded that the two solutions added with two different sweet compounds do not differ in a statistically significant manner as far as the sweetness intensity is concerned (p<0.001).

Composition FE70FJ (which is produced according to the present invention) therefore has, the dose being the same as compared to sucrose: the same sweetening power, an energy value reduced by 30% and a glycaemic index reduced by 70%.

**Example 2**

SWEETENER COMPOSITION
FE50FJ

| Ingredient | wt% |
|------------|-----|
| Erythritol | 50 |
| Fructose | 50 |

The relative sweetening power (RSP) of the natural sweetener composition FE50FJ with respect to sucrose was evaluated. The tasting threshold for recognising sweetness was computed, in accordance with ASTM E679 (2004), for this purpose first for sucrose, and then for sweetener mixture FE50FJ.

The selected reference method for determining the tasting threshold of sucrose and of the sweetener mixture FE50FJ was the 3-Alternative Forced Choice method as stated in the previously mentioned ASTM standard, that discloses a fast and reliable method to determine absolute and recognition sensory thresholds for each kind of compound.

The samples were tested in the ISO/DIS 8589:2006 standard sensory analysis laboratories of the food and microbiology science and technology department of the University of Milan in two tasting sessions carried out on two different days.

The procedure provides the preparation of a series of increasing concentrations of the substance at issue maintaining a constant dilution factor. Within the concentration range, the highest concentration must clearly be recognisable by the whole group of tasters while the lowest must not be recognisable by any of the tasters.

Six concentrations were prepared for each of the two sweetening compounds maintaining a constant dilution factor. The solutions were prepared one hour before the tasting and stored at a room temperature of 20°C.

A group of judges formed by 16 individuals (9 women and 7 men) in an age range between 20 and 44 years old, who were selected and trained, took part in the test for the recognition tasting thresholds.

The judges, who were previously informed not to smoke, drink or eat anything in the hour preceding the tasting test, were called in the laboratory between 12.00 am and 1.00 pm.

Each taster evaluated, in individual rooms and under white light, three small glasses coded by three figure numbers. Each triad corresponded to two samples formed by water and a sample formed by the aqueous solution containing the sweetener at issue.

The six triads of samples proceeded from the triad containing the lowest concentration to the highest concentration.

For each triad, the judges were instructed to rinse their mouths with natural mineral water (having a low dry residue) before the test and between a triad and another, and to taste the solutions in the given order, from left to right and indicate which sample within the triad was perceived as different. In case no difference was perceived, the judges were instructed to answer in any case even if their selection was based on a assumption (forced selection method).

To reduce psychological and physiological mistakes by the judges during testing and due to the order in which the samples were presented, the position of the sample containing the dilution of the sweetener was randomised and balanced judge by judge and session by session, i.e. each judge tasted the samples in a different order.

The results were acquired by the computer system Fizz v2.31g (Biosystemes, Couternon, France).

As stated by the ASTM E679 (2004) standard, for each taster the results were expressed as correct answers (correct identification of the different sample) for each of the six concentrations. The individual tasting threshold of the subjects was then determined as a geometrical average between the value of the concentration corresponding to the last wrong answer and the first correct answer.

The relative sweetening power of sweetener mixture FE50FJ was tested as ratio between the concentration corresponding to the recognition threshold of the sweet taste of the sucrose and the concentrations corresponding to the recognition threshold of the sweet taste of mixture FE50FJ, as shown below:

$$\texttt{relative sweetening power = [sucrose]/[FE50FJ]} \textbf{ = 1.03}$$

The results have therefore shown that, the concentration being the same, sweetener mixture FE50FJ results being 1.03 times sweeter with respect to a sucrose solution.

Composition FE50FJ of the present invention therefore has, the dose of sucrose being the same: the same sweetening power, an energy value reduced by 50% and a glycaemic index reduced by 80%.

**Claims**

1. Solid sweetener composition consisting of a number of grains; the composition comprises grains of crystals of erythritol and at least 40 wet%, with respect to the total weight of the composition, of grains of crystals of a further sweetener selected from a group consisting of:

   fructose, sucrose, glucose and a mixture thereof; the crystals of erythritol and the crystals of the further sweetener are separate from each other; the sum of the weights of erythritol and the further sweetener constitutes at least 97 wt% of the total weight of the composition; the composition comprising at least 25 wt%, with respect to the total weight of the composition, of erythritol.

2. The composition according to claim 1, wherein the further sweetener is selected from the group consisting of:

   fructose, sucrose and a mixture thereof.

3. Composition according to claim 1 or 2, wherein the further sweetener is fructose.

4. Composition according to one of the preceding claims, and comprising at least 50 wt%, with respect to the total weight of the composition, of the further sweetener.

5. Composition according to one of the preceding claims, and comprising up to 75 wet%, with respect to the total weight of the composition, of the further sweetener.

6. Composition according to claim 5, and comprising up to 70 wt%, with respect to the total weight of the composition, of the further sweetener.

7. Composition according to one of the preceding claims, and comprising at least 30 wt%, with respect to the total weight of the composition, of erythritol.

8. Composition according to one of the preceding claims, and comprising up to 60 wt%, with respect to the total weight of the composition, of erythritol.

9. Composition according to claim 8, and comprising up to 50 wt%, with respect to the total weight of the composition, of erythritol.

10. Composition according to one of the preceding claims, and comprising less than 0.9 wt%, with respect to the total weight of the composition, of calcium.

11. Composition according to one of the preceding claims, and comprising at least 55 wt%, with respect to the total weight of the composition, of the further sweetener.

12. Composition according to one of the preceding claims, wherein the sum of the weights of erythritol and the further sweetener constitutes at least 97 wt% of the total weight of the composition.

13. Composition according to any of the preceding claims, wherein the sum of the weights of erythritol and the further sweetener constitutes at least 99 wt% of the total weight of the composition; the grains of crystals of erythritol and the grains of the crystals of the further sweetener are separate from one another.

**Patentansprüche**

1. Feste Süßstoffzusammensetzung, bestehend aus einer Anzahl von Körnern; die Zusammensetzung umfasst Körner von Kristallen von Erythritol und mindestens 40 Gew.-%, bezogen auf das Gesamtgewicht der Zusammensetzung, von Körnern von Kristallen von einem weiteren Süßstoff, ausgewählt aus einer Gruppe, bestehend aus: Fruktose, Saccharose, Glukose und einem Gemisch daraus; die Kristalle von Erythritol und die Kristalle des weiteren Süßstoffes sind voneinander getrennt; die Summe von den Gewichten von Erythritol und dem weiteren Süßstoff stellt mindestens 97 Gew.-% des Gesamtgewichts der Zusammensetzung dar; die Zusammensetzung umfasst mindestens 25 Gew.-%, bezogen auf das Gesamtgewicht der Zusammensetzung, Erythritol.

2. Zusammensetzung nach Anspruch 1, wobei der weitere Süßstoff ausgewählt ist aus der Gruppe, bestehend aus: Fruktose, Saccharose und einem Gemisch daraus.

3. Zusammensetzung nach Anspruch 1 oder 2, wobei der weitere Süßstoff Fruktose ist.

4. Zusammensetzung nach einem der vorstehenden Ansprüche und umfassend mindestens 50 Gew.-%, bezogen auf das Gesamtgewicht der Zusammensetzung, des weiteren Süßstoffes.

5. Zusammensetzung nach einem der vorstehenden Ansprüche und umfassend bis zu 75 Gew.-%, bezogen auf das Gesamtgewicht der Zusammensetzung, des weiteren Süßstoffes.

6. Zusammensetzung nach Anspruch 5 und umfassend bis zu 70 Gew.-%, bezogen auf das Gesamtgewicht der Zusammensetzung, des weiteren Süßstoffes.

7. Zusammensetzung nach einem der vorstehenden Ansprüche und umfassend mindestens 30 Gew.-%, bezogen auf das Gesamtgewicht der Zusammensetzung, Erythritol.

8. Zusammensetzung nach einem der vorstehenden Ansprüche und umfassend bis zu 60 Gew.-%, bezogen auf das Gesamtgewicht der Zusammensetzung, Erythritol.

9. Zusammensetzung nach Anspruch 8 und umfassend bis zu 50 Gew.-%, bezogen auf das Gesamtgewicht der Zusammensetzung, Erythritol.

10. Zusammensetzung nach einem der vorstehenden Ansprüche und umfassend weniger als 0,9 Gew.-%, bezogen auf das Gesamtgewicht der Zusammensetzung, Kalzium.

11. Zusammensetzung nach einem der vorstehenden Ansprüche und umfassend mindestens 55 Gew.-%, bezogen auf das Gesamtgewicht der Zusammensetzung, des weiteren Süßstoffes.

**12.** Zusammensetzung nach einem der vorstehenden Ansprüche, wobei die Summe von den Gewichten von Erythritol und dem weiteren Süßstoff mindestens 97 Gew.-% des Gesamtgewichts der Zusammensetzung darstellt.

**13.** Zusammensetzung nach einem der vorstehenden Ansprüche, wobei die Summe von den Gewichten von Erythritol und dem weiteren Süßstoff mindestens 99 Gew.-% des Gesamtgewichts der Zusammensetzung darstellt; die Körner der Kristalle von Erythritol und die Körner der Kristalle des weiteren Süßstoffes getrennt voneinander sind.

**Revendications**

**1.** Composition d'édulcorant solide constituée d'un certain nombre de grains ; la composition contient des grains de cristaux d'érythritol et au moins 40 % en poids, rapporté au poids total de la composition, de grains de cristaux d'un autre édulcorant choisi dans le groupe constitué de : fructose, sucrose, glucose, et un mélange de ceux-ci ; les cristaux d'érythritol et les cristaux de l'autre édulcorant sont séparés les uns des autres ; la somme des poids d'érythritol et de l'autre édulcorant constitue au moins 97 % du poids total de la composition ; la composition comprenant au moins 25 % en poids d'érythritol, rapporté au poids total de la composition.

**2.** Composition selon la revendication 1, dans laquelle l'autre édulcorant est choisi dans le groupe constitué de fructose, sucrose et de leur mélange.

**3.** Composition selon la revendication 1 ou 2, dans laquelle l'autre édulcorant est du fructose.

**4.** Composition selon l'une des revendications précédentes et contenant au moins 50 % en poids, rapporté au poids total de la composition, de l'autre édulcorant.

**5.** Composition selon l'une des revendications précédentes et contenant jusqu'à 75 % en poids, rapporté au poids total de la composition, de l'autre édulcorant.

**6.** Composition selon la revendication 5 et contenant jusqu'à 70 % en poids, rapporté au poids total de la composition, de l'autre édulcorant.

**7.** Composition selon l'une des revendications précédentes et contenant au moins 30 % en poids, rapporté au poids total de la composition, d'érythritol.

**8.** Composition selon l'une des revendications précédentes et contenant jusqu'à 60 % en poids, rapporté au poids total de la composition, d'érythritol.

**9.** Composition selon la revendication 8 et contenant jusqu'à 50 % en poids, rapporté au poids total de la composition, d'érythritol.

**10.** Composition selon l'une des revendications précédentes et contenant moins de 0,9 % en poids, rapporté au poids total de la composition, de calcium.

**11.** Composition selon l'une des revendications précédentes et contenant au moins 55 % en poids, rapporté au poids total de la composition, de l'autre édulcorant.

**12.** Composition selon l'une des revendications précédentes, dans laquelle la somme des poids d'érythritol et de l'autre édulcorant constitue au moins 97 % en poids du poids total de la composition.

**13.** Composition selon l'une des revendications précédentes, dans laquelle la somme des poids d'érythritol et de l'autre édulcorant constitue au moins 99 % en poids du poids total de la composition ; les grains de cristaux d'érythritol et les grains de cristaux de l'autre édulcorant sont séparés les uns des autres.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0140902 A
- WO 0160167 A

- US 2008213452 A
- US 2009104326 A